(19) Europäisches Patentamt
European Patent Office
Office européen des brevets

(11) EP 4 800 135 A1

(12) **EUROPEAN PATENT APPLICATION**
published in accordance with Art. 153(4) EPC

(43) Date of publication:
**02.09.2026 Bulletin 2026/36**

(21) Application number: **24882234.8**

(22) Date of filing: **11.10.2024**

(51) International Patent Classification (IPC):
***C22C 38/00*** *(2006.01)* ***B23K 9/23*** *(2006.01)*
***C21D 8/02*** *(2026.01)* ***C22C 38/58*** *(2006.01)*

(52) Cooperative Patent Classification (CPC):
**B23K 9/23; C21D 8/02; C22C 38/00; C22C 38/58**

(86) International application number:
**PCT/JP2024/036573**

(87) International publication number:
**WO 2025/089121 (01.05.2025 Gazette 2025/18)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.10.2023 JP 2023185015**

(71) Applicant: **Nippon Steel Corporation**
**Tokyo 100-8071 (JP)**

(72) Inventors:
- **UCHIYAMA, Tetsuya**
  **Tokyo 100-8071 (JP)**
- **NAKANISHI, Daiki**
  **Tokyo 100-8071 (JP)**
- **USUKI, Hirokazu**
  **Tokyo 100-8071 (JP)**
- **SHIRAHATA, Hiroyuki**
  **Tokyo 100-8071 (JP)**

(74) Representative: **Vossius & Partner**
**Patentanwälte Rechtsanwälte mbB**
**Siebertstraße 3**
**81675 München (DE)**

# (54) WELDED JOINT AND PRESSURE VESSEL

(57) A welded joint, in which a base metal has a specific chemical composition having $\alpha$ represented by the following formula of 5.0 to 16.0, a tensile strength of 615 MPa to 930 MPa, and a microstructure of a portion that is 1/4 of the thickness from the surface having a total area ratio of lower bainite and martensite of 15.0% or more, a total area ratio of upper bainite, the lower bainite, and the martensite of 90.0% or more, and an area ratio of retained austenite of less than 1.7%, and in which an effective crystal grain size in a region between a fusion line of a welded portion and a position 1 mm away from the fusion line in a heat-affected zone is 100.0 $\mu$m or less; and a pressure vessel comprising the welded joint.

$$\alpha = 0.50 \times \sqrt{[C]} \times (1 + 0.64[Si]) \times (1 + 4.10[Mn]) \times (1 + 0.27[Cu]) \times (1 + 0.52[Ni]) \times (1 + 2.33[Cr]) \times (1 + 3.14[Mo])$$

EP 4 800 135 A1

## Description

### Technical Field

The present disclosure relates to a welded joint and a pressure vessel.

### Background Art

Steel products can be used in welded structures such as buildings, bridges, ships, pipelines, offshore structures, pressure vessels (tanks). Steel products having excellent strength and adaptability to low-temperature toughness are effective in low-temperature applications.

Cryogenic steel is used in cryogenic pressure vessels such as storage tanks for liquefied gases. Al-killed steel, nickel steel, high-Mn steel, austenitic stainless steel and the like exist in a cryogenic steel, in accordance with the usage temperature. For example, nickel steel such as 3.5% Ni steel is used as a material for tanks that store liquefied ethane or liquefied ethylene whose usage temperatures are around -100°C.

As with this 3.5% Ni steel, steel products that require ensured low-temperature toughness-exemplified by those used in cryogenic pressure vessels-are often made to contain Ni.

For example, Patent Document 1 proposes a cryogenic nickel steel plate having a specific chemical composition containing 3.0% or more but less than 5.0% of Ni, an alumina cluster index of 0.030 or less, an effective crystal grain size of 12.0 μm or less, an average value of tensile strength of from 540 MPa to 610 MPa, and a Charpy impact absorption energy of 150 J or more at -140°C.

Further, Patent Document 2 proposes a nickel-containing steel product for low temperatures that has excellent toughness and has a specific chemical composition containing 2.7% or more and 5.0% or less of Ni, wherein the prior austenite grain size at the time of quenching heating is 20 μm or less, and the effective crystal grain size after a heat treatment is 12 μm or less, and the tensile strength is 450 MPa or more and 690 MPa or less.

Patent Document 3 proposes a method for manufacturing a high-toughness, high tensile strength steel excellent in stress corrosion cracking resistance, by which a steel slab having a specific chemical composition containing 1.0 to 7.5% of Ni is subjected to heating, rolling, quenching, and tempering under specific conditions.

Patent Document 1: Japanese Patent Publication (JP-B) No. 6610352
Patent Document 2: JP-B No. 6984319
Patent Document 3: Japanese Patent Application Laid-Open (JP-A) No. S63-241114

### SUMMARY OF INVENTION

### Technical Problem

Having both high strength and low-temperature toughness is desirable for cryogenic steels used in cryogenic pressure vessels. Further, a cryogenic pressure vessel is manufactured by welding a steel product, and, in order to eliminate residual stress that arises due to the welding, there are cases in which a post weld heat treatment (called PWHT upon occasion) is carried out. Recently, the demand for low-temperature toughness of welded joints after PWHT has increased even more.

An object of the present disclosure is to provide a welded joint and a pressure vessel suitable for low-temperature uses in which a steel product having high tensile strength is used as a base metal and good low-temperature toughness is obtained regardless of before or after post weld heat treatment.

### Solution to Problem

The gist of the present disclosure is as follows.

<1> A welded joint comprising a base metal made of a steel product and a welded portion,

wherein the steel product has a chemical composition, in mass%,
C: from 0.03% to 0.20%,
Si: from 0.01% to 0.50%,
Mn: from 0.10% to 2.00%,
P: 0.025% or less,
S: 0.0250% or less,

Ni: 4.51% or more and less than 6.10%,
Al: from 0.001% to 0.100%,
O: 0.0100% or less,
N: 0.0100% or less,
Cu: 0 to 1.50%,
Cr: 0 to 3.00%,
Mo: 0 to 2.00%,
B: 0 to 0.0050%,
Nb: 0 to 0.050%,
Ti: 0 to 0.050%,
V: 0 to 0.10%,
Mg: 0 to 0.0200%,
Ca: 0 to 0.0200%,
REM: 0 to 0.0200%, and
balance: Fe and impurities,
and in which $\alpha$ represented by the following Formula (1) is from 5.0 to 16.0,
wherein:

a tensile strength of the steel product is from 615 MPa to 930 MPa,
a microstructure of a portion that is 1/4 of a thickness, in a thickness direction from a surface of the steel product, comprises lower bainite and martensite, in which a total area ratio of the lower bainite and the martensite is 15.0% or more, a total area ratio of upper bainite, the lower bainite, and the martensite is 90.0% or more, and an area ratio of retained austenite is less than 1.7%, and
an effective crystal grain size in a region between a fusion line of the welded portion and a position 1 mm away from the fusion line in a heat-affected zone is 100.0 $\mu$m or less,

$$\alpha = 0.50 \times \sqrt{[C]} \times (1 + 0.64[Si]) \times (1 + 4.10[Mn]) \times (1 + 0.27[Cu]) \times (1 + 0.52[Ni]) \times (1 + 2.33[Cr]) \times (1 + 3.14[Mo]) \quad (1):$$

wherein a symbol of an element in square brackets in Formula (1) represents a content amount (mass%) of a corresponding element contained in the steel product, provided that zero is substituted when the corresponding element is not contained.

<2> The welded joint according to <1>, wherein the chemical composition comprises the following Group A:
[Group A]:
one or two or more selected from the group consisting of:

Cu: from 0.01% to 1.50%,
Cr: from 0. 01% to 3.00%,
Mo: from 0.01% to 2.00%, and
B: from 0.0003% to 0.0050%.

<3> The welded joint according to <1> or <2>, wherein the chemical composition comprises the following Group B:
[Group B]:
one or two or more selected from the group consisting of:

Nb: from 0.001% to 0.050%,
Ti: from 0.001% to 0.050%, and
V: from 0.01% to 0.10%.

<4> The welded joint according to any one of <1> to <3>, wherein the chemical composition comprises the following Group C:
[Group C]:
one or two or more selected from the group consisting of:

Mg: from 0.0003% to 0.0200%,
Ca: from 0.0003% to 0.0200%, and

REM: from 0.0003% to 0.0200%.

<5> The welded joint according to any one of <1> to <4>, wherein a Charpy impact absorption energy at -110°C of the heat-affected zone is 50 J or more.
<6> The welded joint according to any one of <1> to <5>, wherein, when a heat treatment is carried out on the welded joint, in which a rate of temperature increase and a rate of temperature decrease in a temperature region of 425°C or more are 55°C/h and temperature is held for 2 hours at 600°C, a Charpy impact absorption energy at -110°C of the heat-affected zone at portions subjected to the heat treatment is 50 J or more.
<7> A pressure vessel, comprising the welded joint according to any one of <1> to <6>.

Advantageous Effects of Invention

According to the present disclosure, a welded joint and a pressure vessel suitable for low-temperature uses in which a steel product having high tensile strength is used as a base metal and good low-temperature toughness is obtained regardless of before or after post weld heat treatment can be provided. The low temperature herein means a temperature range, for example, from -10 to -110°C.

BRIEF DESCRIPTION OF DRAWINGS

Fig. 1 is a diagram showing an example of a result of discrimination of microstructure.

Fig. 2A is a schematic diagram showing an example of a portion of a single-bevel welded joint where a test piece used for Charpy impact absorption energy of a heat-affected zone is to be taken.

Fig. 2B is a schematic diagram showing another example of a portion of a single-bevel welded joint where a test piece used for Charpy impact absorption energy of a heat-affected zone is to be taken.

Fig. 3A is a schematic diagram showing an example of a portion of a double-bevel welded joint where a test piece used for Charpy impact absorption energy of a heat-affected zone is to be taken.

Fig. 3B is a schematic diagram showing another example of a portion of a double-bevel welded joint where a test piece used for Charpy impact absorption energy of a heat-affected zone is to be taken.

Fig. 4 is a schematic perspective view showing a notch shape of the test piece in Fig. 2A.

DESCRIPTION OF EMBODIMENTS

Hereinbelow, the present disclosure is described in detail.
The "post weld heat treatment" in the present disclosure means a post weld heat treatment in accordance with the content provided in JIS Z 3700:2009 "Method of post weld heat treatment" unless otherwise specified.
The "steel product" or "base metal" in the present disclosure means a steel portion not including a surface treatment layer such as a plating layer or a coating film. However, a surface treatment layer such as a plating layer or a coating film may be formed on the surfaces of the steel product and the welded joint in the present disclosure. The "base metal" means a steel portion that is not affected by welding as compared to a welded portion (a weld metal and a heat-affected zone) of a welded joint. The "heat-affected zone" means a steel portion thermally affected by welding.
In the present disclosure, numerical ranges expressed by using "-" mean ranges in which the numerical values listed before and after the "-" are included as the lower limit value and upper limit value, respectively. However, numerical value ranges in which "exceeds" or "less than" is appended to the numerical value listed before or after the "-" mean a range in which these numerical values are not included as the lower limit value or the upper limit value.
With respect to the contents of the elements in a chemical composition, "%" means "mass%".
The term "step" is not only an independent step and includes steps that, even in a case in which that step cannot be clearly distinguished from another step, achieve the intended object of that step.
A welded joint according to an embodiment of the present disclosure will now be described. First, new findings obtained from results of studies by the inventors of the present disclosure, through which the welded joint according to the present disclosure has been completed, are described in detail.
The inventors of the present disclosure conducted studies to improve the strength of a steel product used to

manufacture a welded joint. The tensile strength of the steel product is secured by the constitution of microstructure. The inventors of the present disclosure took a sample from a 1/4t portion (t: the thickness of the steel product), which is a part of 1/4 of the thickness in the thickness direction from a surface of a steel product after hot rolling and accelerated cooling, and performed a tensile test and observed the microstructure. As a result, it has been found that, in the microstructure of the 1/4t portion of a steel product having a tensile strength of 615 MPa or more and 930 MPa or less, the area ratio of ferrite is less than 10.0% and the total area ratio of upper bainite, lower bainite, and martensite is 90.0% or more. The total area ratio of upper bainite, lower bainite, and martensite was measured using an electron backscatter diffraction method (hereinafter referred to as "EBSD").

Further, the inventors of the present disclosure conducted studies to secure toughness of a welded joint using the above steel product. The toughness of the welded joint is secured by reducing the area of regions surrounded by high angle grain boundaries at each of which the difference in crystal orientation is 15° or more. The inventors of the present disclosure took a sample from a heat-affected zone of a welded joint, and the sample was subjected to mechanical polishing and electrolytic polishing. The circle-equivalent diameter of the region surrounded by high angle grain boundaries was measured with an EBSD device attached to an FE-SEM (field emission scanning electron microscope). Hereinafter, the circle-equivalent diameter of the region surrounded by high angle grain boundaries is referred to as a crystal grain size. The part where the crystal grain size is measured is a region between the position of a fusion line (hereinafter, occasionally referred to as "FL") and a position 1 mm away from the fusion line (hereinafter, "FL + 1 mm"). The crystal grain size was measured at a magnification of 80× in a region of 4 $mm^2$ along the fusion line. A value calculated by the average of the largest 10 crystal grain sizes among those measured in the region of 4 $mm^2$ was taken as an effective crystal grain size (in the present disclosure, occasionally referred to as an "effective crystal grain size of the heat-affected zone"). A finding that, when the effective crystal grain size of the heat-affected zone of the welded joint is 100.0 μm or less, the toughness of the welded joint tends to improve further regardless of before or after post weld heat treatment has been obtained.

Further, the inventors of the present disclosure conducted studies to reduce the effective crystal grain size in the heat-affected zone of the welded joint. The effective crystal grain size in the heat-affected zone of the welded joint is secured by the constitution of microstructure of the base metal made of a steel product. The inventors of the present disclosure took a sample from a 1/4t portion of a steel product, and observed the microstructure; further, the inventors of the present disclosure welded a steel product to manufacture a welded joint, and performed a Charpy impact test of a heat-affected zone of the welded joint. As a result, it has been found that, in the microstructure of a steel product in which the Charpy impact absorption energy at -110°C of the heat-affected zone is 50 J or more, the total of area ratios of lower bainite and martensite is 15.0% or more and the area ratio of retained austenite is less than 1.7%. The total of area ratios of lower bainite and martensite was measured using EBSD. The area ratio of retained austenite was measured by an X-ray diffraction method. The volume ratio of retained austenite measured by the X-ray diffraction method can be regarded as the corresponding area ratio.

<Chemical composition>

Next, alloy elements included in the chemical composition of the steel product in the welded joint according to the present disclosure are described. In the following description of alloy elements, "%" of the content means "mass%". Further, the steel product that is a base metal of the welded joint according to the present disclosure may be referred to as a "steel product in the present disclosure".

(C: 0.03% or more and 0.20% or less)

C is an element that enhances the strength of the steel product. In the present disclosure, the C content is 0.03% or more from the viewpoint of securing strength of a steel product used for structures. The C content is preferably 0.05% or more, or 0.07% or more. On the other hand, C is an element that reduces toughness; in the present disclosure, the C content is 0.20% or less from the viewpoint of securing toughness of the heat-affected zone (hereinafter, occasionally referred to as "HAZ"). The C content is preferably 0.16% or less, 0.14% or less, or 0.12% or less.

(Si: 0.01% or more and 0.50% or less)

Si is used as a deoxidizer, and is also an element that forms a solid solution in the steel and increases the strength. In the present disclosure, the Si content is 0.01% or more from the viewpoint of controlling the concentration of O contained in the molten steel. The Si content is preferably 0.03% or more, 0.05% or more, 0.10% or more, or 0.12% or more. On the other hand, if the Si content is excessive, a hard phase may be formed in the HAZ, and the toughness may be reduced. Thus, in the present disclosure, the Si content is 0.50% or less from the viewpoint of securing the HAZ toughness. The Si content is preferably 0.30% or less, or 0.20% or less.

(Mn: 0.10% or more and 2.00% or less)

Mn is an element that is used as a deoxidizing agent, and further, that improves the hardenability of the steel and contributes to increasing the strength. From the standpoint of controlling the O concentration contained in molten steel, in the present disclosure, the Mn content is 0.10% or more. Moreover, due to Mn in an amount of 0.10% or more, by forming MnS, the solid-solution S is reduced, and hot cracking is prevented. From the standpoint of ensuring the strength of the steel product and the toughness of the HAZ, the Mn content is preferably 0.30% or more, or 0.50% or more. On the other hand, if the Mn content is excessive, there are cases in which the toughness after PWHT decreases due to the Mn segregating at the grain boundary at the time of PWHT. Accordingly, from the standpoint of ensuring toughness of the steel product after PWHT, in the present disclosure, the Mn content is 2.00% or less. The Mn content is preferably 1.80% or less, or 1.50% or less.

(P: 0.025% or less)

P is an impurity element. Although the lower limit of the P content is not limited, from the standpoint of the manufacturing cost, in the present disclosure, the P content may be 0.001% or more. On the other hand, if the P content is excessive, there are cases in which the toughness after PWHT decreases due to the P segregating at the grain boundary at the time of PWHT. Accordingly, in the present disclosure, the P content is 0.025% or less. The P content is preferably 0.016% or less, 0.012% or less, or 0.008% or less.

(S: 0.0250% or less)

S is an impurity element. Although the lower limit of the S content is not limited, from the standpoint of the manufacturing cost, in the present disclosure, the S content may be 0.0001% or more. On the other hand, if the S content is excessive, there are cases in which elongated MnS is generated at the center segregation region, and the toughness and ductility of the steel product and the HAZ deteriorate. From the standpoint of ensuring the toughness and ductility of the steel product and the HAZ, the S content is 0.0250% or less. The S content is preferably 0.0100% or less or 0.0050% or less.

(Ni: 4.51% or more and less than 6.10%)

Ni is an element that is effective in improving the hardenability and toughness of the steel. Therefore, in the present embodiment, the Ni content is 4.51% or more. The Ni content is preferably 5.00% or more, or 5.25% or more. However, Ni is an expensive element, and, from the standpoint of cost reduction, in the present disclosure, the Ni content is less than 6.10%. The Ni content is preferably 6.00% or less, or 5.75% or less.

(Al: 0.001% or more and 0.100% or less)

Al is an element that is effective in deoxidation, and is an element that, by forming a nitride, refines the crystal grain at the time of quenching. Therefore, in the present disclosure, the Al content is 0.001% or more. However, if Al is excessively contained, there is the concern that the Al will generate coarse nitride particles, and the toughness of the steel product and the HAZ will decrease. Accordingly, the Al content is 0.100% or less. The Al content is preferably 0.080% or less, 0.070% or less, 0.060% or less, or 0.050% or less.

(O: 0.0100% or less)

O is an impurity element. Although the lower limit of the O content is not limited, from the standpoint of the manufacturing cost, in the present disclosure, the O content may be 0.0001% or more. On the other hand, if the O content is excessive, there are cases in which coarse oxide particles are generated, and the toughness and ductility of the steel product and the HAZ deteriorate. From the standpoint of ensuring the toughness and ductility of the steel product and the HAZ, the O content is 0.0100% or less. The O content is preferably 0.0060% or less, 0.0050% or less, or 0.0040% or less.

(N: 0.0100% or less)

N is an impurity element. Although the lower limit of the N content is not limited, from the standpoint of the manufacturing cost, in the present disclosure, the N content may be 0.0001% or more. From the standpoint of ensuring the properties of the steel product and the toughness of the HAZ, in the present disclosure, the N content is 0.0100% or less. The N content is preferably 0.0050% or less, or 0.0040% or less.

The steel product in the present disclosure may contain other elements (optional elements) instead of some of the Fe. The following optional elements in Groups A to C are given as examples, but the contents of these elements may be 0%.

[Group A]

In order to improve the strength and toughness, as needed, the steel product in the present disclosure may be made to contain one or two or more of the optional elements Cu, Cr, Mo, and B that are described hereinafter and have the effect of improving the hardenability.

(Cu: 1.50% or less)

Cu is an element that is sometimes mixed into the steel product in the manufacturing process. However, the lower limit value of the Cu content is not limited and may be 0%. Further, Cu has little adverse effect on the weldability and on the toughness of the HAZ, and has the effect of improving the hardenability of steel, and therefore, is an element that improves the strength of the steel product. Thus, in the present disclosure, the Cu content may be 0.01% or more. The Cu content is preferably 0.10% or more. However, from the standpoint of suppressing the occurrence of Cu cracking at the time of hot rolling of the steel product, in the present disclosure, the Cu content is 1.50% or less. The Cu content is preferably 1.00% or less, 0.80% or less, 0.60% or less, or 0.50% or less.

(Cr: 3.00% or less)

Cr is an element that is sometimes mixed into a steel product in the manufacturing process. However, the lower limit value of the Cr content is not limited, and may be 0%. Further, Cr is also an element that improves the strength of a steel product because it has the effect of increasing the hardenability of the steel. Therefore, in the present disclosure, the Cr content may be 0.01% or more. The Cr content is preferably 0.10% or more. However, from the standpoint of suppressing deterioration in the toughness of the HAZ and weldability, in the present disclosure, the Cr content is 3.00% or less. The Cr content is preferably 2.20% or less, 1.40% or less, or 0.80% or less.

(Mo: 2.00% or less)

Mo is an element that is sometimes mixed into a steel product in the manufacturing process. However, the lower limit value of the Mo content is not limited, and may be 0%. Further, Mo is also an element that improves the strength of a steel product because it has the effect of increasing the hardenability of the steel. Therefore, in the present disclosure, the Mo content may be 0.01% or more. The Mo content is preferably 0.05% or more, 0.10% or more, 0.20% or more or 0.30% or more. However, from the standpoints of suppressing deterioration in the toughness of the HAZ and weldability, and suppressing an increase in the alloy cost, in the present disclosure, the Mo content is 2.00% or less. The Mo content is preferably 1.20% or less, or 0.80% or less.

(B: 0.0050% or less)

B is an element that is sometimes mixed into a steel product in the manufacturing process. However, the lower limit value of the B content is not limited, and may be 0%. Further, B is also an element that exhibits a marked effect of increasing the hardenability of steel and improves the strength of a steel product. Therefore, in the present disclosure, the B content may be 0.0003% or more. However, from the standpoint of suppressing deterioration in the surface quality of a steel slab manufactured in continuous casting, in the present disclosure, the B content is 0.0050% or less. The B content is preferably 0.0030% or less, or 0.0020% or less.

[Group B]

In order to improve the strength, as needed, the steel product in the present disclosure may be made to contain one or two or more of the optional elements Nb, Ti, and V that are described hereinafter and have the effect of increasing the strength of the steel product by precipitates such as carbides or nitrides.

(Nb: 0.050% or less)

Nb is an element that is sometimes mixed into a steel product in the manufacturing process. However, the lower limit value of the Nb content is not limited, and may be 0%. Further, Nb is also an element that forms a carbide or a nitride,

and has the effect of refining the microstructure, and improves the strength of the steel product. Therefore, in the present disclosure, the Nb content may be 0.001% or more. However, from the standpoint of suppressing deterioration in the toughness of the HAZ and weldability, the Nb content is 0.050% or less. The Nb content is preferably 0.040% or less, or 0.030% or less. **In** particular, from the standpoint of ensuring the toughness of the steel product after PWHT, the Nb content may be 0.004% or less.

(Ti: 0.050% or less)

Ti is an element that is sometimes mixed into a steel product in the manufacturing process. However, the lower limit value of the Ti content is not limited, and may be 0%. Further, Ti is also an element that forms a carbide or a nitride, and has the effect of refining the microstructure, and improves the strength of the steel product. Therefore, in the present disclosure, the Ti content may be 0.001% or more. However, from the standpoint of suppressing deterioration in the toughness of the HAZ and weldability, the Ti content is 0.050% or less. The Ti content is preferably 0.040% or less, 0.030% or less, or 0.020% or less. In particular, from the standpoint of ensuring the toughness of the steel product after PWHT, the Ti content may be 0.004% or less, or 0.002% or less.

(V: 0.10% or less)

V is an element that is sometimes mixed into a steel product in the manufacturing process. However, the lower limit value of the V content is not limited, and may be 0%. Further, V is also an element that forms a carbide or a nitride, and improves the strength of the steel product. Therefore, in the present disclosure, the V content may be 0.01% or more. However, from the standpoints of suppressing deterioration in the toughness of the HAZ and weldability, and suppressing an increase in the alloy cost, the V content is 0.10% or less. The V content is preferably 0.08% or less, or 0.05% or less.

[Group C]

In order to improve the toughness of the HAZ, as needed, the steel product in the present disclosure may be made to contain one or two or more of the optional elements Mg, Ca, and REM that are described hereinafter.

(Mg: 0.0200% or less)

Mg is an element that is sometimes mixed into a steel product in the manufacturing process. However, the lower limit value of the Mg content is not limited, and may be 0%. Further, Mg is also an element that forms an oxide and improves the toughness of the heat-affected zone. Therefore, in the present disclosure, the Mg content may be 0.0003% or more, 0.0006% or more, or 0.0010% or more. On the other hand, if the Mg content is excessive, there are cases in which the Mg forms coarse oxide particles and decreases the toughness of the steel. Accordingly, from the standpoint of ensuring the toughness, in the present disclosure, the Mg content is 0.0200% or less. The Mg content is preferably 0.0100% or less, 0.0060% or less, or 0.0040% or less.

(Ca: 0.0200% or less)

Ca is an element that is sometimes mixed into a steel product in the manufacturing process. However, the lower limit value of the Ca content is not limited, and may be 0%. Further, Ca is also an element that, by spheroidizing the sulfide within the steel product, mitigates the effect of the MnS that decreases the toughness of the steel product and the heat-affected zone. Therefore, in the present disclosure, the Ca content may be 0.0003% or more, 0.0006% or more, or 0.0010% or more. On the other hand, if the Ca content is excessive, there are cases in which the Ca forms coarse oxide particles and decreases the toughness of the steel. Accordingly, from the standpoint of ensuring the toughness, in the present disclosure, the Ca content is 0.0200% or less. The Ca content is preferably 0.0100% or less, 0.0060% or less, or 0.0040% or less.

(REM: 0.0200% or less)

Rare earth metal (REM) is a collective term for a total of 17 elements that are the two elements of Sc and Y and fifteen lanthanoid elements such as La, Ce, Nd. The REM content means the total content of the aforementioned 17 elements. REMs are elements that are sometimes mixed into a steel product in the manufacturing process. However, the lower limit value of the REM content is not limited, and may be 0%. Further, REMs are also elements that form oxides and improve the toughness of the heat-affected zone. Therefore, in the present disclosure, the REM content may be 0.0003% or more, 0.0006% or more, or 0.0010% or more. On the other hand, if the REM content is excessive, there are cases in

which the REMs form coarse oxide particles and decrease the toughness of the steel. Accordingly, from the standpoint of ensuring the toughness, in the present disclosure, the REM content is 0.0200% or less. The REM content is preferably 0.0100% or less, 0.0060% or less, or 0.0040% or less.

(Balance: Fe and Impurities)

The balance of the chemical composition of the steel product in the present disclosure is iron (Fe) and impurities. Impurities mean components that are mixed due to raw materials such as ore and scrap, and other factors, at the time of industrially manufacturing the steel product.

In addition to the limits on the contents of the respective elements, in the present disclosure, the range of value $\alpha$ is limited as follows.

(Value $\alpha$: 5.0 or more and 16.0 or less)

Value $\alpha$ is computed by following formula (1).

$$\alpha = 0.50 \times \sqrt{[C]} \times (1+0.64[Si]) \times (1+4.10[Mn]) \times (1+0.27[Cu]) \times (1+0.52[Ni]) \times (1+2.33[Cr]) \times (1+3.14[Mo]) \quad (1)$$

Wherein [C], [Si], [Mn], [Cu], [Ni], [Cr] and [Mo] are the contents (mass%) of C, Si, Mn, Cu, Ni, Cr and Mo in the steel. In a case in which a given element is not contained, zero is substituted in. Note that $\sqrt{[C]}$ has the same meaning as $[C]^{1/2}$.

In the steel product in the present disclosure, the range of value $\alpha$ is 5.0 - 16.0. This is an index expressing the hardenability of the steel product. The greater the value $\alpha$, the more that lower bainite and martensite microstructures having a superior balance of strength and toughness can be formed. When $\alpha$ is in the appropriate range, in the microstructure of the HAZ as well, the ratio of the lower bainite and martensite microstructures having a superior balance of strength and toughness becomes high, and the HAZ toughness also can be ensured. When $\alpha$ is 5.0 or more, the hardenability of the base metal is ensured, and the ratio of the lower bainite and martensite having a favorable balance of strength and toughness increases, and a deterioration in toughness is suppressed. Further, in the microstructure of the HAZ as well, it is easy for the ratio of the lower bainite and martensite to increase, and the HAZ toughness also improves. On the other hand, if value $\alpha$ is 16.0 or less, toughness can be ensured without the strength of the steel product becoming too high, and the toughness after PWHT also can be ensured. Moreover, the HAZ toughness also can be ensured without the HAZ becoming too hard.

Due to the aforementioned numerical value range relating to value $\alpha$ being satisfied, there can be provided a nickel-containing steel product for low temperatures that has excellent strength and toughness. Value $\alpha$ is preferably 5.5 or more, 6.0 or more, or 7.0 or more. Further, value $\alpha$ is preferably 15.5 or less or 15.0 or less.

<Microstructure>

The microstructure of the steel product in the present disclosure is described next. The microstructure of the region that is 1/4 of the thickness in the thickness direction from the surface of the steel product in the present disclosure contains lower bainite and martensite. Further, in addition to lower bainite, upper bainite also may be contained as bainite.

"Bainite" is a collective term for upper bainite and lower bainite. "Upper bainite" is one of or both of upper bainite that contains retained austenite or an MA phase (martensiteaustenite constituent) between the laths, and upper bainite that contains a carbide between the laths. "Lower bainite" is lath-shaped lower bainite containing a carbide within the laths.

There are four forms of "martensite" that are lath, butterfly, lenticular and plate-shaped, but mainly lath martensite is generated in the components of the present disclosure. Lath martensite is a microstructure that is composed of packets and blocks formed from groups of laths having a specific arrangement, and in which a single austenite grain is divided into plural packets.

(Total of Area Ratios of Lower Bainite and Martensite: 15.0% or more)

Lower bainite and martensite are hard phases and increase the toughness of the steel product. From the standpoint of ensuring the toughness of the steel product, the area ratio of lower bainite and martensite at the 1/4t portion is 15.0% or more. The area ratio of lower bainite and martensite at the 1/4t portion is preferably 20.0% or more, or 30.0 or more. The total of the area ratio of the lower bainite and the area ratio of the martensite at the 1/4t portion may be 100%.

(Total of Area Ratios of Upper Bainite, Lower Bainite, and Martensite: 90.0% or more)

From the standpoint of ensuring the strength of the steel product, the total of the area ratios of upper bainite and lower bainite and martensite at the 1/4t portion is 90.0% or more. The total of the area ratios of upper bainite, lower bainite and martensite at the 1/4t portion may be 100%. Further, the upper bainite of the 1/4t portion may be 1% or more.

(Area Ratio of Retained Austenite: less than 1.7%)

From the standpoint of ensuring the toughness of the steel product, the area ratio of the retained austenite of the 1/4t portion is less than 1.7%. The area ratio of the retained austenite of the 1/4t portion is preferably 1.0% or less, and may be 0.0%. This is thought to be because, in the Ni-containing steel product in the present disclosure, the Ni content is lower than conventional 9% Ni steel, and therefore, even if retained austenite were to exist at -110°C, it would be unstable, and, if the steel structure were to incur plastic deformation at the crack tip, the retained austenite would change into martensite due to plasticity-induced martensitic transformation. Thus, the retained austenite at room temperature is made to be less than 1.7% as a volume ratio (area ratio). The area ratio of the retained austenite in the 1/4t portion may be 0.1% or more, or 0.2% or more.

Observation of the microstructure of the steel product is carried out by using a sample in which a 1/4t portion of the steel product serves as the observed surface. Two types of samples on which (a) electrolytic polishing or (b) nital etching is carried out are prepared. Each sample of (a) and (b) is measured at three places by the following method, and the average value of the three places is used as the area ratio of the microstructure of that steel product. Note that three of each sample of (a) and (b) may be prepared, and the averages of the respective samples may be computed. Or, three places of one sample of each may be measured in a visual field, and the average of each computed.

By using an electrolytically polished sample that, after mirror finishing by mechanical polishing, is subjected to electrolytic polishing that removes the strained layers arising due to the mechanical polishing, measurement of the total of the area ratios of the upper bainite, lower bainite, and martensite is carried out by EBSD. The measurement magnification is 200×, and measurement of a range of 400 μm × 400 μm is carried out at a pitch of 0.4 μm. The measuring is carried out in a state in which the beam diameter of the electron beam is 0.4 μm or less. The confidence index (hereinafter called "CI value") is set to 0.1 or more. The determination of ferrite, and upper bainite, lower bainite and martensite, is carried out by setting the threshold value of the Grain Average Misorientation (hereinafter called "GAM") to 0.5. Note that the GAM value is an index defined in OIM Analysis (EBSD crystal orientation analyzing software manufactured by TSL, United States). The region in which the GAM is 0.5 or less is ferrite. The region in which the GAM exceeds 0.5 is upper bainite, lower bainite, martensite, or retained austenite. Because the upper bainite, lower bainite, martensite and retained austenite in the present disclosure are determined by using the GAM of EBSD as the threshold value, not only upper bainite, lower bainite, martensite and retained austenite, but also tempered upper bainite, tempered lower bainite and tempered martensite are included. Comparing the microstructures of direct quenching (DQ) and (DQT) that is carried out thereafter up to tempering (T), although dissolution of the MA and coarsening of carbide occur after tempering, the way of looking at the microstructure does not vary greatly.

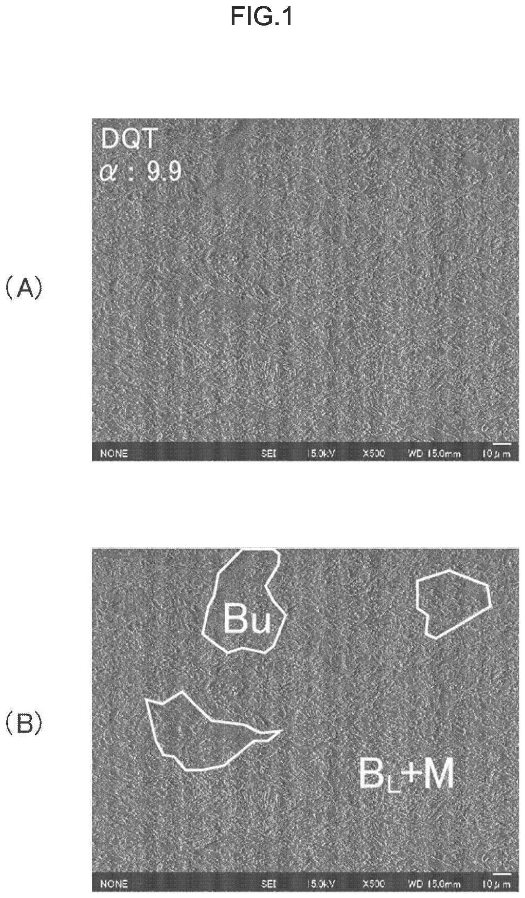

Measurement of the area ratio of the upper bainite by SEM observation is carried out by using a nital etched sample. The measurement magnification is 500×, and measurement of a range of 360 μm × 480 μm is carried out. The portion, which has a clear lath structure and at which carbide and MA have formed along the lath boundary, is upper bainite. The microstructure of the region, at which the internal structure of the microstructure is relatively coarse, and the density of carbide is low and both sparse and dense, is upper bainite. An example of the results of discriminating the microstructures is shown in Fig. 1. (A) and (B) are SEM images of the same region of a steel product that is manufactured by DQT and whose value $\alpha$ is 9.9. In (B), the regions surrounded by the white lines are upper bainite (Bu), and the other regions are lower bainite + martensite ($B_L$+M). In the portions identified as upper bainite (Bu), carbides appearing white are sparsely distributed, and regions with varying density are present. On the other hand, at the portions identified as lower bainite + martensite ($B_L$+M), the carbides are densely and uniformly distributed. The total of the area ratios of the lower bainite, martensite and retained austenite is determined by subtracting the area ratio of the upper bainite from the total of the area ratios of the upper bainite, lower bainite, martensite and retained austenite, which were measured as described above. Moreover, the area ratio of the retained austenite is determined by the measuring method described hereinafter, and the total of the area ratios of the lower bainite and martensite is determined by subtracting the area ratio of the retained austenite from the total of the area ratios of the lower bainite, martensite and retained austenite.

When the total area ratio of lower bainite and martensite is more than 0% according to the above structure discrimination, lower bainite and martensite are usually included. Lower bainite and martensite can be distinguished by a SEM or TEM (transmission electron microscope), and the presence of each structure can be found.

(Area Ratio of Retained Austenite)

The area ratio of retained austenite is measured by an X-ray diffraction method. The area ratio of retained austenite is measured using a sample in which a portion of 1/4 of the thickness in the thickness direction from a surface of the steel product (in the present specification, also referred to as a "1/4t portion") is taken as a measured area. The sample is a test piece having a thickness of 2 mm; the sample is taken from a position of 1/4 of the width from an end portion in the width direction of the steel product, is subjected to chemical polishing, and is used for measurement of the volume ratio of retained austenite by an X-ray diffraction method using a Mo tube. Quantification was performed based on the ratio of the integrated intensities of the (200) and (211) diffraction peaks of the ferrite phase to the integrated intensities of the (200), (220), and (311) diffraction peaks of the austenite phase, and the average value of six combinations was taken. The integrated intensity of the diffraction peak is obtained by fitting the background on the basis of the signals before and after the peak and subtracting the signals. The volume ratio measured by the X-ray diffraction method is regarded as the area ratio.

(Average Crystal Grain Size of Heat-Affected Zone: 100.0 μm or less)

The effective crystal grain size of the heat-affected zone is 100.0 μm or less, from the standpoint of ensuring HAZ toughness. The effective crystal grain size of the heat-affected zone is preferably 95.0 μm or less, or 90.0 μm or less. The lower limit of the effective crystal grain size of the heat-affected zone is not particularly limited, and the effective crystal grain size of the heat-affected zone may be, for example, 50.0 μm or more, or 60.0 μm or more. A sample was taken from the heat-affected zone of the welded joint, and the sample was subjected to mechanical polishing and electrolytic polishing. The circle-equivalent diameter of a region surrounded by high angle grain boundaries was measured, with an EBSD device attached to a field emission scanning electron microscope (FE-SEM). A portion where the crystal grain size is measured falls in a region between a position of a fusion line (occasionally referred to as "FL", hereinafter) and a position 1 mm away from the fusion line ("FL + 1 mm", hereinafter). The crystal grain size was measured in a 4 $mm^2$ region along the fusion line at 80× magnification. A value calculated by averaging the largest ten crystal grain sizes among those measured in the 4 $mm^2$ region was taken as an effective crystal grain size (in the present disclosure, occasionally referred to as "effective crystal grain size of heat-affected zone").

<Mechanical Properties>

A steel product in the present disclosure has mechanical properties that achieve both strength and low-temperature toughness. In particular, the steel product is excellent in toughness at -110°C, and furthermore can exhibit excellent low-temperature toughness even after PWHT.

(Tensile Strength: 615 MPa or more and 930 MPa or less)

In the present disclosure, the tensile strength of the steel product is set to 615 to 930 MPa. In order to reduce the weight of a large welded structure such as a transport tank, a steel product capable of securing strength of the structure even if the thickness is thin is required. Usually, a steel product selected as one used for such a use is a steel product having the tensile strength mentioned above; thus, also the steel product in the present disclosure is manufactured to have the tensile strength mentioned above.

(Yield Ratio)

The yield ratio (YR (%) = [yield strength] / [tensile strength] × 100) of the steel product in the present disclosure is not particularly limited, and is preferably 90% or less. In a case in which there is no yield point, the yield strength is determined by using 0.2% proof stress.

(Charpy Impact Absorption Energy at -110°C of the Heat-Affected Zone)

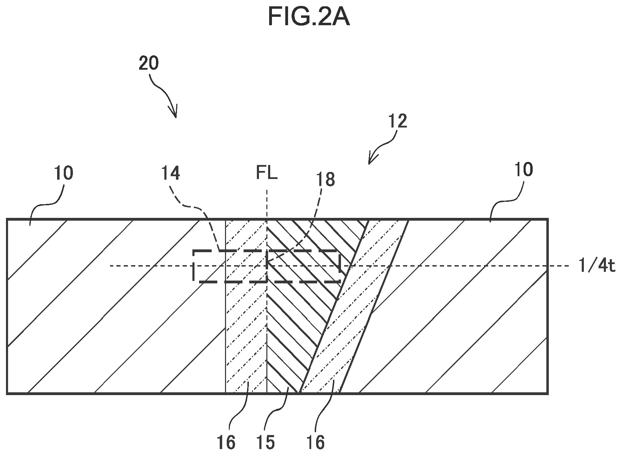

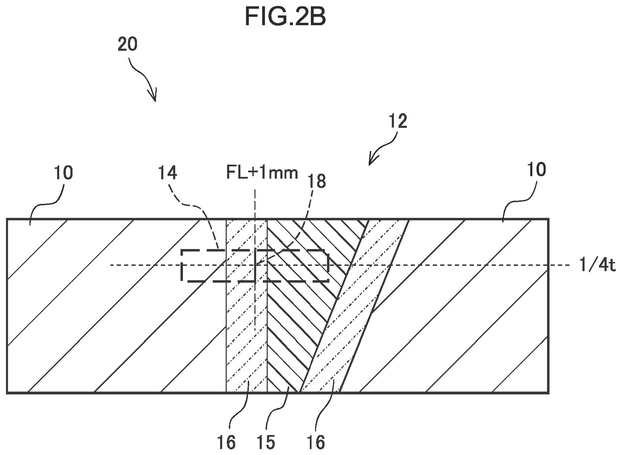

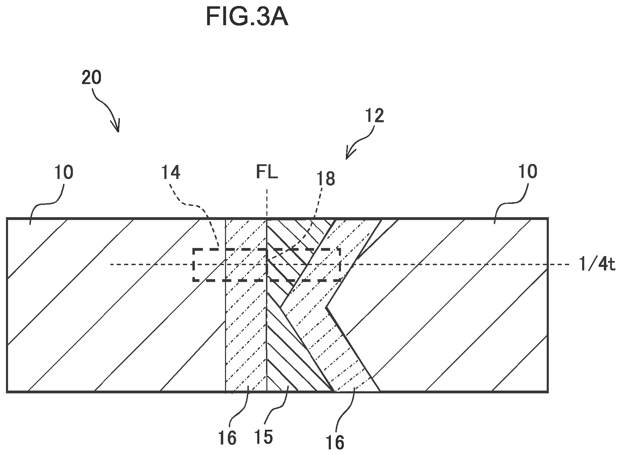

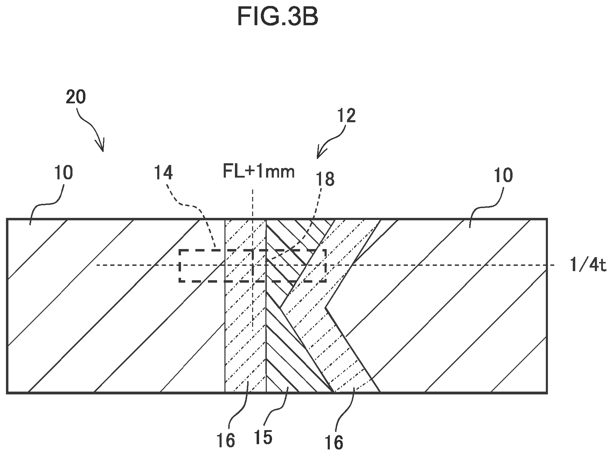

In order to secure high toughness at low temperature, in the welded joint of the present disclosure, the Charpy impact absorption energy of the heat-affected zone at -110°C is preferably 50 J or more. By the fact that the welded joint of the present disclosure has a low-temperature toughness in which the Charpy impact absorption energy at -110°C of the heat-affected zone is 50 J or more, a tank manufactured using the welded joint of the present disclosure can be suitably used for, for example, transportation of liquid carbon dioxide. The Charpy impact absorption energy at -110°C of the heat-affected zone is defined as a numerical value measured by, as shown in Figs. 2A, 2B, 3A, and 3B, using a sample 14 taken from each of a region including the position of a fusion line (FL) of a welded portion 12 and a region including a position 1

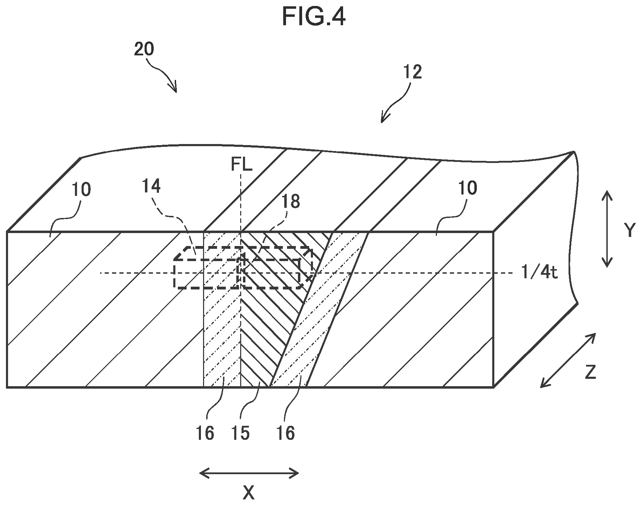

mm away from the fusion line (FL + 1 mm) in a 1/4t portion of a base metal 10 of a welded joint 20. In Figs. 2A, 2B, 3A, and 3B, "15" represents a weld metal, and "16" represents a heat-affected zone (HAZ). As shown in Fig. 4, a notch 18 is formed such that, when the width direction X, the thickness direction Y, and the length direction Z of the base metal 10 are defined, the length direction of the notch 18 of the test piece 14 is parallel to the thickness direction Y of the base metal 10 and the depth direction of the notch 18 is parallel to the length direction Z of the base metal 10. The length direction Z of the base metal 10 is the rolling direction, and the width direction X is a direction perpendicular to the rolling direction Z and the thickness direction Y.

(Charpy Impact Absorption Energy at -110°C of the Heat-Affected Zone after PWHT)

For a low temperature tank, for the purpose of preventing fracture, PWHT may be performed on a welded portion after assembly into a transport tank. When the time during which the welded joint is heated to a temperature range of 425°C or higher is longer, the HAZ toughness tends to decrease. For the welded joint of the present disclosure, when a PWHT in which the holding temperature is 600°C, the holding time is 2 hours, and each of the rates of temperature increase and temperature decrease is 55°C/h in a temperature range of 425°C or higher is performed on the steel product, the toughness of the portion subjected to the PWHT is preferably 50 J or more as a Charpy impact absorption energy at -110°C. The Charpy impact absorption energy at -110°C after PWHT may be 100 J or more. Also the Charpy impact absorption energy at -110°C after PWHT is defined as a numerical value measured using a sample taken from a 1/4 position of the thickness.

The HAZ toughness may be reduced by PWHT. Although the cause is not clear, it is presumed that P (phosphorus) or Mn diffuses into grain boundaries and inclusions grow or aggregate in the microstructure, and consequently the brittleness is reduced and the toughness is reduced. A reduction in toughness due to PWHT is suppressed by limiting the contents of P and Mn and reducing the effective crystal grain size of the heat-affected zone.

The tensile strength (TS) and the yield strength (YS) are measured by a tensile test in accordance with JIS Z2241:2011. In the tensile test, a JIS 14A test piece which is taken from a 1/4 thickness position and of which the longitudinal direction is a direction (C direction) parallel to the width direction of the steel product is used. Each of TS and YS is measured using three test pieces, and is calculated by averaging them. The yield ratio (YR) is computed by (YS/TS) × 100, on the basis of the respective average values of TS and YS.

The toughness of the steel product is evaluated based on a brittle-ductile transition temperature (vTrs) by a Charpy impact test using an impact blade having a radius of 2 mm in accordance with the provision of JIS Z2242:2018. The Charpy impact test is performed three by three at five temperatures, and the brittle fracture rates are measured to calculate vTrs. In the Charpy impact test, a V-notched test piece which is taken from the position of a 1/4t portion of the steel product and of which the longitudinal direction is a direction (C direction) parallel to the width direction of the steel product is used.

The Charpy impact absorption energy of the heat-affected zone is measured by a Charpy impact test at -110°C using an impact blade having a radius of 2 mm in accordance with the provision of JIS Z2242:2018. The Charpy impact absorption energy is measured using three test pieces, and is calculated by averaging them. In the Charpy impact test, as shown in Figs. 2A and 2B and Figs. 3A and 3B, a V-notched test piece taken from a welded joint in a position corresponding to a 1/4t portion of the steel product is used.

The shape of the steel product in the present disclosure is not particularly limited, and is a steel plate, a steel strip, a structural steel, a steel pipe, or the like. However, the steel pipe and the structural steel include a steel product obtained by joining steel plates, for example, a structural steel obtained by joining with a rivet, and the like, in addition to a welded steel pipe and welded structural steel. The thickness of a steel product such as a steel plate, a steel strip, a structural steel, or a steel pipe (for structural steel, the thickness of the flange) is not particularly limited, and is usually 3 mm or more and 150 mm or less. The thickness of the steel product may be 6 mm or more, 10 mm or more, 15 mm or more, or 30 mm or more. The thickness of the steel product may be 100 mm or less, 80 mm or less, or 60 mm or less.

The use of the welded joint according to the present disclosure is not particularly limited either; since the welded joint has mechanical properties that achieve both strength and low-temperature toughness and can exhibit excellent low-temperature toughness particularly even after PWHT, the welded joint can be suitably used as a constituent material for a pressure vessel, specifically a tank for storing and transporting liquefied gas, particularly liquid carbon dioxide.

(Method for manufacturing a steel product)

The method for manufacturing a steel product in the present disclosure is not particularly limited; for the steel product in the present disclosure, for example, a steel slab is manufactured by smelting steel satisfying the chemical composition described above and then performing continuous casting. The steel slab is heated and hot-rolled, is then subjected to direct quenching (DQ), in which it is directly water-cooled, or to reheated quenching (RQ) , in which it is allowed to cool, reheated, and water-cooled, and is thus made into a steel product. In the case of RQ, the step preceding the reheating is not necessarily limited to air-cool and may be water cooling.

(1) DQT: direct quenching (DQ) and tempering (T)
(2) RQT: allowing to cool, reheated quenching (RQ), and tempering (T)

From the standpoint of the manufacturing cost, DQT is preferable in the manufacturing of the steel product in the present disclosure. An example of a preferable manufacturing process is given hereinafter.

From the standpoint of carrying out hot rolling in a temperature range in which the microstructure of the steel to be rolled is austenite, the heating temperature of the steel slab on which the hot rolling is carried out is $Ac_3$ or more. From the standpoint of decreasing the deformation resistance, the heating temperature of the steel slab is preferably 1000°C or more. On the other hand, from the standpoint of suppressing coarsening of the heated y grains, the heating temperature of the hot rolling is 1250°C or less. The heating temperature of the hot rolling is preferably 1200°C or less. Note that $Ac_3$ is a value computed by the following formula.

$$Ac_3 = 937.2 - 436.5C + 56Si - 19.7Mn - 16.3Cu - 26.6Ni - 4.9Cr + 38.1Mo + 124.8V + 136.3Ti - 19.1Nb + 198.4Al + 3315B$$

The element symbols in the formula mean the content (mass%) of each element contained in the steel slab.

There are cases in which the hot rolling is structured by rolling in a temperature range in which recrystallization occurs (rolling in the recrystallization temperature range) and rolling in a temperature range in which recrystallization is suppressed (rolling in the non-recrystallization temperature range).

Rolling in the recrystallization temperature range is hot rolling carried out with the temperature of the steel to be rolled during rolling being 900°C or more. From the standpoint of refining the austenite grain size of the steel product, the cumulative rolling reduction ratio of the rolling in the recrystallization temperature range is preferably 20% or more, and more preferably 30% or more. The cumulative rolling reduction ratio of the rolling in the recrystallization temperature range is determined from the difference between the thickness of the steel slab before hot rolling and the thickness of the steel to be rolled at 900°C.

Cumulative rolling reduction ratio (%) of rolling in recrystallization temperature range = 100 × ([thickness of steel slab] - [thickness of steel to be rolled at 900°C]) / [thickness of steel slab]

Rolling in the non-recrystallization temperature range is hot rolling carried out with the temperature of the steel to be rolled during rolling being less than 900°C. From the standpoint of refining the crystal grain size of the steel product, the cumulative rolling reduction ratio of the rolling in the non-recrystallization temperature range is preferably 20% or more, and more preferably 30% or more. The cumulative rolling reduction ratio of the rolling in the non-recrystallization temperature range is determined from the difference between the thickness of the steel to be rolled at 900°C and the thickness of the steel product after rolling ends.

Cumulative rolling reduction ratio (%) of rolling in non-recrystallization temperature range = 100 × ([thickness of steel to be rolled at 900°C] - [thickness of steel product after rolling ends]) / [thickness of steel to be rolled at 900°C]

From the standpoint of suppressing the generation of ferrite that decreases strength, the end temperature of the hot rolling is $Ar_3$ or more. After hot rolling ends, accelerated cooling such as water cooling is carried out on the steel product. From the standpoint of suppressing the generation of ferrite that decreases strength, the start temperature of the accelerated cooling is $Ar_3$ or more. Note that $Ar_3$ is a value computed by the following formula.

$$Ar_3 = 910 - 310C - 80Mn - 20Cu - 15Cr - 55Ni - 80Mo + 0.35(t-8)$$

The element symbols in the formula mean the content (mass%) of each element contained in the steel product, and t means the thickness (mm) of the steel product.

From the standpoint of promoting bainitic transformation and martensitic transformation, the cooling rate is 1.0°C/s or more. The cooling rate of the accelerated cooling is preferably 5.0°C/s or more, or 10.0°C/s or more. The faster the cooling rate of the accelerated cooling, the more preferable, but from standpoints such as cost and homogeneity of the accelerated cooling, the cooling rate is preferably 50.0°C/s or less, or 30.0°C/s or less. The cooling rate is a value obtained by calculating the cooling rate at a position of 1/4 of the thickness by simulation in accordance with thermal transfer calculation.

The stoppage temperature of the accelerated cooling is 400°C or lower from the viewpoint of improving the strength of the steel product by securing upper bainite, lower bainite, and martensite. The stoppage temperature of the

accelerated cooling is preferably 350°C or lower. The accelerated cooling may be performed to room temperature. The stoppage temperature of the accelerated cooling is preferably 100°C or higher from the viewpoint of dehydrogenation of the steel product.

After the accelerated cooling, the steel product may be subjected to tempering treatment. The heating temperature of the tempering treatment is preferably 650°C or lower, 620°C or lower, or 590°C or lower from the viewpoint of suppressing a reduction in strength. On the other hand, the heating temperature of the tempering treatment is preferably 350°C or higher, or 400°C or higher from the viewpoint of improving toughness.

(Method for Manufacturing Welded Joint)

A method for manufacturing a welded joint (a welding method) according to the present disclosure will now be described.

First, a groove is formed in an end portion of the steel product (base metal) in the present disclosure described above. The shape of the groove is any of a single-bevel groove, a single-J groove, a single-U groove, a double-bevel groove, a double-J groove, and a double-U groove. The groove is butted, and welding is performed using a welding material. The welding material is not particularly limited, and is determined according to the desired characteristics of the welded joint as appropriate. Examples of the welding method include shielded metal arc welding, gas-shielded metal arc welding, submerged arc welding, TIG welding, and the like. The amount of welding heat input and the number of welding passes are determined according to the welding method and the plate thickness as appropriate. The amount of welding heat input is, for example, about 1.0 to 6.0 kJ/mm.

Specific welding conditions of gas-shielded metal arc welding and submerged arc welding are shown below.

In the gas-shielded metal arc welding, a mixed gas of Ar and $CO_2$ is used, and the ratio of $CO_2$ gas is 20%. In the case of a double-bevel groove, the angle of the groove is set to 10R in a tip portion and 30° for each of the upper layer and the lower layer, and welding is performed under the conditions in which the preheating temperature is 100 to 150°C, the inter-pass temperature is 100 to 150°C, the gas flow rate is 15 to 20 L/min for the lower layer portion and 18 to 22 L/min for the upper layer portion, and YM-69F (a solid wire manufactured by Nippon Steel Welding & Engineering Co., Ltd.) is used as a material for forming a weld metal. The welding is performed under the conditions in which the amount of current is 250 to 270 A, the voltage is 27 to 33 V, the amount of heat input is 1.5 to 2.4 kJ/mm, and the welding speed is 30 to 40 cm/min. The number of passes is determined depending on the plate thickness.

In the submerged arc welding, in the case of a single-bevel groove, the gap of the groove is set to 10 mm and the angle is set to 30°, and welding is performed under the conditions in which the preheating temperature is 100 to 150°C, the inter-pass temperature is 100 to 150°C, Y-80M is used as a material for forming a weld metal, and NB-250H (a submerged arc welding material manufactured by Nippon Steel Welding & Engineering Co., Ltd.) is used as flux. The welding is performed under the conditions in which the amount of current is 630 to 670 A, the voltage is 27 to 33 V, the amount of heat input is 3.5 to 4.4 kJ/mm, and the welding speed is 25 to 34 cm/min. The number of passes is determined depending on the plate thickness.

(Method for Evaluating Welded Joint)

After the welded joint is produced, a notch is introduced into a fusion line (FL) or a position 1 mm away from the fusion line (FL + 1 mm) as shown in Figs. 2A, 2B, 3A, 3B, and 4, and a Charpy impact test is performed. In the case where the shape of the groove is any of a single-bevel shape, a J shape, a U shape, a double-bevel shape, a double-J shape, and a double-U shape, the V notch of FL is made in a tangent on the heat-affected zone side of the fusion line, and is set to include 80% or more of the heat-affected zone. The V-notch of FL + 1 mm is made in a position 1 mm away from the FL notch. The grain size of the microstructure in the vicinity of FL is roughly determined depending on the amount of welding heat input. Therefore, the absorption energy of the heat-affected zone largely depends on the amount of heat input regardless of the groove shape.

EXAMPLES

The welded joint according to the present disclosure is described concretely hereinafter by way of Examples. However, the conditions in the following Examples are examples of conditions that are employed in order to confirm the feasibility and the effects of the present disclosure, and the present disclosure is not limited to the following Examples.

[Manufacturing of Steel Product]

First, slabs having the chemical compositions shown in Table 1 were cast by continuous casting. The balance, which is other than the components listed in Table 1, is Fe and impurities. Further, blank cells mean that the alloy elements

were not intentionally added in the steelmaking process. The underlines mean that the value is outside of the scope of the present disclosure.

[Table 1]

| No. | Chemical components (mass%) | | | | | | | | | | | | | | | | | | | |
|---|---|---|---|---|---|---|---|---|---|---|---|---|---|---|---|---|---|---|---|---|
| | C | Si | Mn | P | S | Ni | Al | N | O | Ti | Nb | Mg | Ca | REM | Cu | Cr | Mo | V | B | α |
| 1 | 0.15 | 0.36 | 1.32 | 0.007 | 0.0023 | 4.55 | 0.031 | 0.0022 | 0.0021 | | | | | | | | | | | 5.1 |
| 2 | 0.19 | 0.30 | 1.75 | 0.005 | 0.0007 | 5.34 | 0.035 | 0.0016 | 0.0010 | | | | | | | | | | | 8.0 |
| 3 | 0.15 | 0.24 | 1.42 | 0.006 | 0.0022 | 5.34 | 0.028 | 0.0023 | 0.0019 | | 0.021 | | | | | | | | | 5.8 |
| 4 | 0.16 | 0.27 | 1.83 | 0.008 | 0.0041 | 5.89 | 0.002 | 0.0031 | 0.0024 | 0.013 | | | 0.0093 | | | | | | | 8.1 |
| 5 | 0.07 | 0.12 | 1.14 | 0.013 | 0.0058 | 6.02 | 0.025 | 0.0006 | 0.0008 | | | | | | | 0.38 | 0.39 | | | 14.0 |
| 6 | 0.19 | 0.21 | 1.43 | 0.011 | 0.0018 | 5.92 | 0.018 | 0.0036 | 0.0045 | | | | | 0.0078 | | | 0.07 | | | 8.4 |
| 7 | 0.08 | 0.25 | 0.59 | 0.007 | 0.0007 | 4.87 | 0.034 | 0.0044 | 0.0027 | | | | | | 0.26 | 0.21 | 0.35 | | | 6.6 |
| 8 | 0.07 | 0.06 | 0.65 | 0.011 | 0.0026 | 5.10 | 0.049 | 0.0032 | 0.0035 | 0.002 | | | | | | 0.46 | 0.32 | | | 7.6 |
| 9 | 0.14 | 0.27 | 0.73 | 0.008 | 0.0034 | 5.38 | 0.021 | 0.0048 | 0.0018 | | | | 0.0012 | | | 0.57 | | | 0.0003 | 7.7 |
| 10 | 0.06 | 0.16 | 0.52 | 0.009 | 0.0017 | 5.54 | 0.027 | 0.0034 | 0.0023 | | | | | | 0.39 | 0.46 | 0.35 | 0.05 | | 7.9 |
| 11 | 0.04 | 0.25 | 1.33 | 0.010 | 0.0022 | 5.76 | 0.013 | 0.0043 | 0.0024 | | | | 0.0023 | 0.0022 | 0.71 | 0.52 | 0.25 | 0.01 | | 14.1 |
| 12 | 0.11 | 0.28 | 0.92 | 0.013 | 0.0058 | 5.89 | 0.029 | 0.0054 | 0.0011 | | | | | | | 0.45 | 0.31 | | | 15.3 |
| 13 | 0.13 | 0.22 | 0.61 | 0.007 | 0.0021 | 6.03 | 0.033 | 0.0035 | 0.0012 | | 0.003 | 0.0024 | | 0.0010 | 0.42 | 0.74 | | | | 9.0 |
| 14 | 0.12 | 0.24 | 0.69 | 0.008 | 0.0018 | 4.95 | 0.028 | 0.0025 | 0.0035 | 0.001 | | | | | | 0.19 | 0.37 | 0.03 | 0.0013 | 8.5 |
| 15 | 0.07 | 0.15 | 0.57 | 0.012 | 0.0036 | 5.10 | 0.045 | 0.0029 | 0.0032 | | | | | | | 0.52 | 0.43 | | | 9.2 |
| 16 | 0.05 | 0.10 | 0.65 | 0.008 | 0.0026 | 5.28 | 0.023 | 0.0053 | 0.0026 | | | | | | 0.52 | 0.53 | 0.44 | | | 9.9 |
| 17 | 0.14 | 0.05 | 1.40 | 0.009 | 0.0023 | 5.56 | 0.003 | 0.0044 | 0.0019 | 0.007 | | 0.0058 | | | 0.38 | 0.58 | | | | 13.1 |
| 18 | 0.09 | 0.32 | 1.25 | 0.014 | 0.0072 | 5.23 | 0.014 | 0.0023 | 0.0014 | | | | | | | | 0.82 | | | 14.7 |
| 19 | 0.08 | 0.08 | 1.01 | 0.004 | 0.0034 | 5.12 | 0.083 | 0.0024 | 0.0038 | | 0.008 | | | | | 1.95 | | | | 15.5 |
| 20 | 0.08 | 0.25 | 0.93 | 0.013 | 0.0042 | 4.86 | 0.022 | 0.0056 | 0.0048 | | | | | | | 0.08 | | | | **<u>3.3</u>** |
| 21 | 0.06 | 0.18 | **<u>2.33</u>** | 0.008 | 0.0028 | 5.12 | 0.048 | 0.0040 | 0.0041 | | 0.002 | | | | | 0.19 | 0.14 | | | 11.0 |
| 22 | 0.09 | 0.21 | 1.21 | 0.012 | 0.0029 | 5.34 | 0.034 | 0.0058 | 0.0029 | | | | | | 0.21 | 0.59 | 0.48 | | | **<u>24.1</u>** |
| 23 | 0.16 | 0.28 | 1.28 | 0.006 | 0.0031 | 4.61 | 0.026 | 0.0027 | 0.0025 | | | | | | | | | | | 5.0 |

Next, steel products were manufactured from these slabs under the manufacturing conditions listed in Table 2. "Temper heat treatment" is the heating temperature in the tempering treatment after the quenching.

[Table 2]

| No. | Plate thickness (mm) | $Ac_3$ [°C] | Rolling conditions | | | | | $Ar_3$ [°C] | Direct quenching conditions | | | Reheat quenching conditions | | Temper heat treatment [°C] |
|---|---|---|---|---|---|---|---|---|---|---|---|---|---|---|
| | | | Heating temperature [°C] | Cumulative rolling reduction ratio at 900°C or higher [%] | Cumulative rolling reduction ratio at less than 900°C [%] | End temperature [°C] | Cooling after rolling | | Start temperature [°C] | Stoppage temperature [°C] | Cooling rate [°C/s] | Reheating temperature [°C] | Cooling after reheating | |
| 1 | 35 | 751 | 1200 | 63 | 67 | 810 | water-cooling | 517 | 790 | 207 | 11.3 | - | - | 580 |
| 2 | 40 | 701 | 1150 | 55 | 70 | 790 | air-cooling | 429 | - | - | - | 930 | water-cooling | 530 |
| 3 | 50 | 720 | 1180 | 60 | 58 | 810 | water-cooling | 471 | 787 | 36 | 5.6 | - | - | 460 |
| 4 | 25 | 692 | 1100 | 56 | 75 | 780 | water-cooling | 396 | 765 | 124 | 13.4 | - | - | 630 |
| 5 | 55 | 749 | 1050 | 55 | 58 | 810 | water-cooling | 446 | 789 | 58 | 7.7 | - | - | 600 |
| 6 | 20 | 687 | 1100 | 70 | 73 | 750 | water-cooling | 410 | 726 | 82 | 8.5 | - | - | 550 |
| 7 | 50 | 790 | 1050 | 55 | 64 | 770 | water-cooling | 549 | 753 | 365 | 4.9 | - | - | 620 |
| 8 | 60 | 781 | 1000 | 48 | 53 | 760 | water-cooling | 542 | 743 | 274 | 5.8 | - | - | 600 |
| 9 | 45 | 736 | 1170 | 64 | 56 | 780 | water-cooling | 517 | 760 | 177 | 7.5 | - | - | 640 |
| 10 | 40 | 779 | 1200 | 67 | 60 | 820 | air-cooling | 514 | - | - | - | 960 | water-cooling | 650 |
| 11 | 50 | 754 | 1100 | 43 | 65 | 800 | water-cooling | 447 | 785 | 25 | 3.4 | - | - | 550 |
| 12 | 60 | 745 | 1150 | 63 | 42 | 760 | water-cooling | 465 | 746 | 86 | 4.2 | - | - | 530 |

(continued)

| No. | Plate thickness (mm) | $Ac_3$ [°C] | Rolling conditions | | | | | $Ar_3$ [°C] | Direct quenching conditions | | | Reheat quenching conditions | | Temper heat treatment [°C] |
|---|---|---|---|---|---|---|---|---|---|---|---|---|---|---|
| | | | Heating temperature [°C] | Cumulative rolling reduction ratio at 900°C or higher [%] | Cumulative rolling reduction ratio at less than 900°C [%] | End temperature [°C] | Cooling after rolling | | Start temperature [°C] | Stoppage temperature [°C] | Cooling rate [°C/s] | Reheating temperature [°C] | Cooling after reheating | |
| 13 | 35 | 716 | 1100 | 76 | 45 | 790 | water-cooling | 479 | 773 | 157 | 5.3 | - | - | 620 |
| 14 | 40 | 780 | 1070 | 52 | 68 | 800 | water-cooling | 524 | 769 | 132 | 8.9 | - | - | 530 |
| 15 | 50 | 791 | 1100 | 55 | 58 | 780 | water-cooling | 535 | 763 | 256 | 5.8 | - | - | 580 |
| 16 | 60 | 778 | 1150 | 46 | 60 | 830 | water-cooling | 517 | 810 | 221 | 5.1 | - | - | 600 |
| 17 | 40 | 696 | 1050 | 66 | 56 | 820 | water-cooling | 444 | 800 | 189 | 6.8 | - | - | 630 |
| 18 | 50 | 786 | 1100 | 54 | 55 | 800 | air-cool-ing | 444 | - | - | - | 950 | water-cooling | 610 |
| 19 | 45 | 757 | 1150 | 45 | 72 | 790 | water-cooling | 507 | 775 | 112 | 7.9 | - | - | 580 |
| 20 | 55 | 773 | 1050 | 50 | 55 | 770 | water-cooling | 559 | 752 | 168 | 5.3 | - | - | 630 |
| 21 | 35 | 753 | 1200 | 68 | 54 | 800 | water-cooling | 419 | 783 | 134 | 2.2 | - | - | 580 |
| 22 | 50 | 763 | 1050 | 65 | 52 | 810 | water-cooling | 455 | 796 | 356 | 4.5 | - | - | 540 |
| 23 | 37 | 740 | 1150 | 62 | 64 | 800 | water-cooling | 515 | 780 | 255 | 9.8 | - | - | 560 |

[Manufacturing of a Welded Joint]

For each of the steel products other than Nos. 12 and 18, the steel products were used to produce a double-bevel groove, and multi-layer gas-shielded metal arc welding (GMAW) was performed to manufacture a welded joint.

In the GMAW welding, a mixed gas of Ar and $CO_2$ is used, and the ratio of $CO_2$ gas is 20%. For the double-bevel groove, the angle of the groove was set to 10R in a tip portion and 30° for each of the upper layer and the lower layer, and welding was performed under the conditions where the preheating temperature was 100 to 150°C, the inter-pass temperature was 100 to 150°C, the gas flow rate was 17 L/min for the lower layer portion and 20 L/min for the upper layer portion, and YM-69F (a solid wire manufactured by Nippon Steel Welding & Engineering Co., Ltd.) was used as a weld metal. The welding was performed under the conditions in which the amount of current was 260 A, the voltage was 30 V, the amount of heat input was 2.0 kJ/mm, and the welding speed was 35 cm/min. The number of passes was changed depending on the plate thickness. For each of Nos. 12 and 18, the steel products were used to produce a single-bevel groove, and multi-layer submerged arc (SAW) welding was performed to manufacture a welded joint.

In the SAW welding, the gap of the single-bevel groove was set to 10 mm and the angle was set to 30°, and the welding was performed under the conditions in which the preheating temperature was 100 to 150°C, the inter-pass temperature was 100 to 150°C, Y-80M was used as a weld metal, and NB-250H (a submerged arc welding material manufactured by Nippon Steel Welding & Engineering Co., Ltd.) was used as a flux. The welding was performed under the conditions in which the amount of current was 650 A, the voltage was 30 V, the amount of heat input was 4.40 J/mm, and the welding speed was 29 cm/min. The number of passes was changed depending on the plate thickness.

[Measurement and Evaluation]

The microstructures and mechanical properties of the obtained steel products and welded joints (heat-affected zones) were measured by the above-described methods. The results are shown in Table 3. The meanings of symbols of the microstructure are as follows. For the region identified as lower bainite + martensite (BL + M), the presence of lower bainite and martensite was confirmed by SEM observation. The balance of the microstructure is pearlite, MA phase, or ferrite.

Bu: upper bainite
BL: lower bainite
M: martensite
Retained γ: retained austenite

For the toughness of the steel product, vTrs was measured.

For the toughness of the heat-affected zone, a notch was made at FL or FL + 1 mm on the I side of the double-bevel groove or the single-bevel groove, and a Charpy impact test was performed at -110°C. For the HAZ toughness, the average value of Charpy impact absorption energies (KV2) at -110°C when welded joints were as-manufactured (as-weld toughness), and the average value of Charpy impact absorption energies at -110°C after a PWHT in which the holding temperature was 600°C, the holding time was 2 hours, and each of the rates of temperature increase and temperature decrease in a temperature range of 425°C or higher was 55°C/h were measured.

The toughness was measured for each of (1) a case where the steel product (base metal) was not subjected to heat treatment, (2) a case where heat treatment was not performed after welding, and (3) a case where heat treatment was performed after welding as described below, and was measured using a sample taken from a part of 1/4 of the thickness in each case.

(1) Base metal toughness

vTrs obtained by Charpy impact tests at various temperatures

(2) Welded joint toughness

The average value of Charpy impact absorption energies at -110°C after manufacturing welded joints, each obtained by a process in which a double-bevel groove or a single-bevel groove was produced and multi-layer gas-shielded metal arc welding (GMAW) with the amount of heat input set to 2.0 kJ/mm or multi-layer submerged arc (SAW) welding with the amount of heat input set to 4.0 kJ/mm was performed

(3) Welded joint toughness after PWHT

The average value of Charpy impact absorption energies at -110°C after the following steps: manufacturing welded joints, each obtained by a process in which a double-bevel groove or a single-bevel groove was produced and multi-layer gas-shielded metal arc welding (GMAW) with the amount of heat input set to 2.0 kJ/mm or multi-layer submerged arc (SAW) welding with the amount of heat input set to 4.0 kJ/mm was performed; and then performing a PWHT in which the holding temperature was 600°C, the holding time was 2 hours, and each of the rates of temperature increase and temperature decrease in a temperature range of 425°C or higher was 55°C/h

[Table 3]

| No. | Microstructure of steel product (area ratio) | | | Base metal properties of steel product | | | Welding method | | Effective crystal grain size in heat-affected zone [μm] | Welded joint toughness | | | | Notes |
|---|---|---|---|---|---|---|---|---|---|---|---|---|---|---|
| | | | | | | | | | | As-weld toughness, KV2 [J] | | Toughness after PWHT, KV2 [J] | | |
| | BL+M [%] | Bu+BL+M [%] | Retained γ [%] | YS [MPa] | TS [MPa] | vTrs [°C] | Welding technique | Amount of heat input [kJ/mm] | | FL | FL+1mm | FL | FL+lmm | |
| 1 | 26.2 | 92.1 | 0.1 | 526 | 635 | -114 | GMAW | 2.0 | 93.2 | 113 | 134 | 97 | 112 | Example of invention |
| 2 | 50.3 | 94.8 | 0.3 | 635 | 751 | -119 | GMAW | 2.0 | 79.6 | 142 | 151 | 129 | 140 | |
| 3 | 30.7 | 92.8 | 0.2 | 534 | 658 | -116 | GMAW | 2.0 | 94.8 | 119 | 138 | 85 | 96 | |
| 4 | 52.8 | 94.6 | 0.4 | 644 | 761 | -122 | GMAW | 2.0 | 78.6 | 170 | 186 | 123 | 134 | |
| 5 | 97.1 | 97.3 | 1.2 | 791 | 893 | -121 | GMAW | 2.0 | 76.3 | 173 | 186 | 161 | 175 | |
| 6 | 60.2 | 97.2 | 0.6 | 651 | 768 | -122 | GMAW | 2.0 | 77.2 | 174 | 186 | 143 | 154 | |
| 7 | 45.9 | 95.8 | 0.2 | 553 | 645 | -118 | GMAW | 2.0 | 72.3 | 140 | 152 | 138 | 151 | |
| 8 | 47.7 | 97.1 | 0.2 | 567 | 669 | -119 | GMAW | 2.0 | 71.5 | 142 | 154 | 131 | 145 | |
| 9 | 50.4 | 98.3 | 0.3 | 589 | 683 | -120 | GMAW | 2.0 | 72.5 | 143 | 157 | 132 | 145 | |
| 10 | 51.8 | 97.2 | 0.2 | 594 | 695 | -119 | GMAW | 2.0 | 71.6 | 144 | 158 | 142 | 156 | |
| 11 | 96.2 | 97.4 | 1.1 | 766 | 887 | -123 | GMAW | 2.0 | 73.6 | 157 | 164 | 115 | 126 | |
| 12 | 97.1 | 97.5 | 1.2 | 772 | 894 | -124 | SAW | 4.0 | 74.1 | 121 | 133 | 104 | 112 | |
| 13 | 67.8 | 96.3 | 0.7 | 652 | 758 | -130 | GMAW | 2.0 | 65.3 | 197 | 213 | 193 | 204 | |
| 14 | 62.3 | 95.2 | 0.6 | 643 | 741 | -131 | GMAW | 2.0 | 66.2 | 192 | 203 | 219 | 226 | |
| 15 | 75.6 | 94.8 | 0.8 | 658 | 789 | -127 | GMAW | 2.0 | 64.2 | 194 | 198 | 178 | 192 | |
| 16 | 78.8 | 97.1 | 0.8 | 663 | 790 | -128 | GMAW | 2.0 | 63.5 | 199 | 210 | 197 | 208 | |
| 17 | 96.2 | 98.3 | 1.1 | 756 | 867 | -119 | GMAW | 2.0 | 68.9 | 172 | 185 | 145 | 156 | |
| 18 | 96.8 | 97.2 | 1.2 | 772 | 887 | -122 | SAW | 4.0 | 67.8 | 115 | 128 | 89 | 96 | |
| 19 | 98.7 | 98.7 | 1.3 | 782 | 901 | -123 | GMAW | 2.0 | 69.9 | 171 | 183 | 170 | 177 | |
| 20 | **8.2** | **78.2** | 0.1 | **476** | **565** | -73 | GMAW | 2.0 | **122.8** | **36** | **40** | **34** | **40** | Comparative Example |
| 21 | 75.7 | 92.3 | 0.8 | 672 | 793 | **-68** | GMAW | 2.0 | 79.5 | **65** | **69** | **13** | **17** | |
| 22 | 98.1 | 98.1 | 1.6 | **867** | **987** | -66 | GMAW | 2.0 | 79.8 | **42** | **45** | **23** | **26** | |

(continued)

| No. | Microstructure of steel product (area ratio) | | | Base metal properties of steel product | | | Welding method | | Effective crystal grain size in heat-affected zone [μm] | Welded joint toughness | | | | Notes |
|---|---|---|---|---|---|---|---|---|---|---|---|---|---|---|
| | | | | | | | | | | As-weld toughness, KV2 [J] | | Toughness after PWHT, KV2 [J] | | |
| | BL+M [%] | Bu+BL+M [%] | Retained γ [%] | YS [MPa] | TS [MPa] | vTrs [°C] | Welding technique | Amount of heat input [kJ/mm] | | FL | FL+1mm | FL | FL+lmm | |
| 23 | 26.0 | 91.8 | 0.0 | 519 | 629 | -110 | GMAW | 2.0 | 94.2 | 108 | 129 | 94 | 109 | Example of invention |

Nos. 1 to 19, and 23 are Examples of the present invention, and Nos. 20 to 22 are Comparative Examples.

In No. 20, the value $\alpha$ was less than the lower limit value of the present disclosure, so that the hardenability was insufficient, and the strength was insufficient. Also the effective crystal grain size of the heat-affected zone was found to exceed 100.0 $\mu$m, so that sufficient low-temperature toughness was not obtained.

In No. 21, Mn went over the upper limit, so that the welded joint toughness was poor. In particular, the low-temperature toughness after PWHT was poor.

In No. 22, the value $\alpha$ exceeded the upper limit value of the present disclosure, so that the hardenability was too high, and the strength was excessive. In addition, the welded joint toughness was poor.

In contrast to the Comparative Examples, in all the Examples of present invention (Nos. 1 to 19, and 23), the chemical composition and microstructure of the steel product were appropriately controlled, the tensile strength was in an appropriate range of 615 MPa or more and 930 MPa or less, and furthermore the Charpy impact absorption energy at -110°C of the heat-affected zone was high regardless of before or after PWHT and low-temperature HAZ toughness of 50 J or more was obtained.

Industrial Applicability

The welded joints according to the present disclosure can be mainly used for pressure vessels, particularly transport tanks of liquefied carbon dioxide. Further, the welded joints according to the present disclosure can also be used in manufacturing other welded structures such as buildings, bridges, ships, pipelines, offshore structures, and pressure vessels (tanks).

The disclosures of Japanese Patent Application No. 2023-185015 filed on October 27, 2023 are, in their entireties, incorporated by reference into the present specification. All publications, patent applications, and technical standards mentioned in the present specification are incorporated by reference into the present specification to the same extent as if such individual publication, patent application, or technical standard was specifically and individually put forth herein.

Description of Reference Signs

10 base metal
12 welded portion
14 test piece
15 weld metal
16 heat-affected zone
18 notch

**Claims**

**1.** A welded joint comprising a base metal made of a steel product and a welded portion,

wherein the steel product has a chemical composition, in mass%,
C: from 0.03% to 0.20%,
Si: from 0.01% to 0.50%,
Mn: from 0.10% to 2.00%,
P: 0.025% or less,
S: 0.0250% or less,
Ni: 4.51% or more and less than 6.10%,
Al: from 0.001% to 0.100%,
O: 0.0100% or less,
N: 0.0100% or less,
Cu: 0 to 1.50%,
Cr: 0 to 3.00%,
Mo: 0 to 2.00%,
B: 0 to 0.0050%,
Nb: 0 to 0.050%,
Ti: 0 to 0.050%,
V: 0 to 0.10%,

Mg: 0 to 0.0200%,
Ca: 0 to 0.0200%,
REM: 0 to 0.0200%, and
balance: Fe and impurities,
and in which $\alpha$ represented by the following Formula (1) is from 5.0 to 16.0,
wherein:

a tensile strength of the steel product is from 615 MPa to 930 MPa,
a microstructure of a portion that is 1/4 of a thickness, in a thickness direction from a surface of the steel product, comprises lower bainite and martensite, in which a total area ratio of the lower bainite and the martensite is 15.0% or more, a total area ratio of upper bainite, the lower bainite, and the martensite is 90.0% or more, and an area ratio of retained austenite is less than 1.7%, and
an effective crystal grain size in a region between a fusion line of the welded portion and a position 1 mm away from the fusion line in a heat-affected zone is 100.0 μm or less,

$$\alpha = 0.50 \times \sqrt{[C]} \times (1 + 0.64[Si]) \times (1 + 4.10[Mn]) \times (1 + 0.27[Cu]) \times (1 + 0.52[Ni]) \times (1 + 2.33[Cr]) \times (1 + 3.14[Mo]) \quad (1):$$

wherein a symbol of an element in square brackets in Formula (1) represents a content amount (mass%) of a corresponding element contained in the steel product, provided that zero is substituted when the corresponding element is not contained.

**2.** The welded joint according to claim 1, wherein the chemical composition comprises the following Group A:
[Group A]:
one or two or more selected from the group consisting of:

Cu: from 0.01% to 1.50%,
Cr: from 0. 01% to 3.00%,
Mo: from 0.01% to 2.00%, and
B: from 0.0003% to 0.0050%.

**3.** The welded joint according to claim 1 or 2, wherein the chemical composition comprises the following Group B:
[Group B]:
one or two or more selected from the group consisting of:

Nb: from 0.001% to 0.050%,
Ti: from 0.001% to 0.050%, and
V: from 0.01% to 0.10%.

**4.** The welded joint according to any one of claims 1 to 3, wherein the chemical composition comprises the following Group C:
[Group C]:
one or two or more selected from the group consisting of:

Mg: from 0.0003% to 0.0200%,
Ca: from 0.0003% to 0.0200%, and
REM: from 0.0003% to 0.0200%.

**5.** The welded joint according to any one of claims 1 to 4, wherein a Charpy impact absorption energy at -110°C of the heat-affected zone is 50 J or more.

**6.** The welded joint according to any one of claims 1 to 5, wherein, when a heat treatment is carried out on the welded joint, in which a rate of temperature increase and a rate of temperature decrease in a temperature region of 425°C or more are 55°C/h and temperature is held for 2 hours at 600°C, a Charpy impact absorption energy at -110°C of the heat-affected zone at portions subjected to the heat treatment is 50 J or more.

**7.** A pressure vessel, comprising the welded joint according to any one of claims 1 to 6.

FIG.1

(A)

DQT
α : 9.9
NONE SEI 15.0kV X500 WD 15.0mm 10 μm

(B)

Bu
BL+M
NONE SEI 15.0kV X500 WD 15.0mm 10 μm

FIG.2A

20
12
10
14
FL
18
10
1/4t
16
15
16

FIG.2B

20
12
10
14
FL+1mm
18
10
1/4t
16
15
16

FIG.3A

20
12
10
14
FL
18
10
1/4t
16
15
16

FIG.3B

20
12
10
14
FL+1mm
18
10
1/4t
16
15
16

FIG.4

20
12
FL
10
14
18
10
Y
1/4t
Z
16
15
16
X

**INTERNATIONAL SEARCH REPORT**

International application No.
**PCT/JP2024/036573**

**A. CLASSIFICATION OF SUBJECT MATTER**

***C22C 38/00***(2006.01)i; ***B23K 9/23***(2006.01)i; ***C21D 8/02***(2006.01)i; ***C22C 38/58***(2006.01)i
FI: C22C38/00 301B; C22C38/00 302Z; B23K9/23; B23K9/23 C; C22C38/58; C21D8/02 B; C21D8/02 D

According to International Patent Classification (IPC) or to both national classification and IPC

**B. FIELDS SEARCHED**

Minimum documentation searched (classification system followed by classification symbols)

C22C38/00-38/60; B23K9/23; C21D8/02

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2022-15244 A (NIPPON STEEL CORPORATION) 21 January 2022 (2022-01-21) | 1-7 |
| A | JP 2000-355730 A (KAWASAKI STEEL CORP.) 26 December 2000 (2000-12-26) | 1-7 |
| A | JP 2019-14937 A (NIPPON STEEL & SUMITOMO METAL CORPORATION) 31 January 2019 (2019-01-31) | 1-7 |
| A | JP 2017-160512 A (NIPPON STEEL & SUMITOMO METAL CORPORATION) 14 September 2017 (2017-09-14) | 1-7 |

☐ Further documents are listed in the continuation of Box C.    ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **25 December 2024** | **14 January 2025** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**
**Information on patent family members**

International application No.
**PCT/JP2024/036573**

| Patent document cited in search report | Publication date (day/month/year) | Patent family member(s) | Publication date (day/month/year) |
|---|---|---|---|
| JP 2022-15244 A | 21 January 2022 | (Family: none) | |
| JP 2000-355730 A | 26 December 2000 | (Family: none) | |
| JP 2019-14937 A | 31 January 2019 | (Family: none) | |
| JP 2017-160512 A | 14 September 2017 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 6610352 B
- JP 6984319 B
- JP S63241114 A
- JP 2023185015 A